# EUROPEAN PATENT APPLICATION

(11) **EP 1 158 434 A2**
(43) Date of publication of application: **28.11.2001**
(21) Application number: 01109400.0
(22) Date of filing: 19.04.2001
(51) Int. Cl.: G06F 17/60

(54) **Information providing system and information providing method**

(30) Priority: 21.04.2000 JP 2000121420
(71) Applicant: NEC CORPORATION, Tokyo (JP)
(72) Inventor: Adachi, Masahito, Minato-ku, Tokyo (JP)
(74) Representative: VOSSIUS & PARTNER

(57) **Abstract**

An information provider stores information in an information-providing server 10. Printer 30 acquires the information stored in the information providing server 10, prints the information on a print medium, and notifies the amount of printed information to the information providing server 10. The information provider for the amount of information that is notified pays the customer.

## Description

The present invention relates to an information providing system and an information providing method that provides information via a network such as the Internet.

A conventional information providing system that provides information -- for example, an advertisement -- via a network, such as the Internet, has provided customers with information that is displayed on a terminal screen.

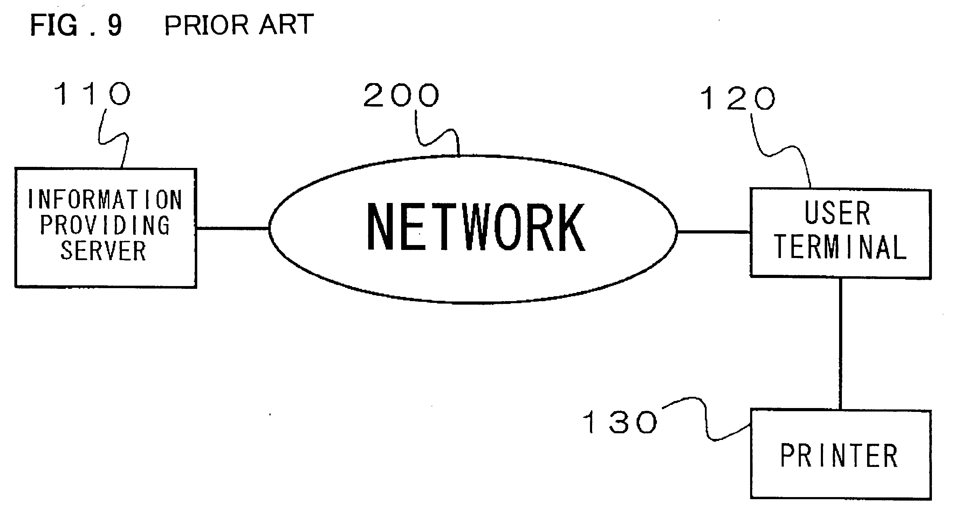

FIG. 9 is a block diagram showing the configuration of a conventional information providing system. Referring to this figure, the conventional information providing system comprises an information providing server 110 used by an information provider, a user terminal 120 used by a customer, and a network 200 connecting the information providing server 110 and the user terminal 120. Some users have printer 130 connected to the user terminal 120.

In the information providing system shown in FIG. 9, information such as an advertisement displayed in a web page created by the information providing server 110 is accessed via the network 200 and is displayed on the screen of the user terminal 120. Information displayed on the screen of the user terminal 120 is also printed on the printer 130 as the user desires.

In the information providing system described above, the information provider can monitor the information-providing server to check to see if a customer views the information such as an advertisement. However, the information provider cannot identify a customer who has viewed the information.

However, in the information providing system described above, one of the problems is that information, such as an advertisement provided by the information provider, is viewed by a customer only when the customer positively accesses the information providing server to display a web page on the user terminal 120.

In view of the foregoing, it is an object in one aspect of the present invention to provide an information providing system and an information providing method that increases the number of times a customer views information provided by the information provider.

In another aspect, it is another object of the present invention to provide an information providing system and an information providing method that increases the number of times a customer views information provided by the information provider at no additional charge.

According to an aspect of the present invention there is provided an information providing system comprising printer for printing information on a print medium; a user terminal connected to the print means (printer) and sending print information to the printer; and an information providing server delivering information via a communication line, wherein the printer comprises means for acquiring the information delivered from the information providing server, the means for acquiring the information being connected to the information providing server via the communication line; means for printing the acquired information according to a print instruction received from the user terminal; and means for notifying an amount of information acquired from the information providing server and printed, wherein the user terminal comprises means for sending a print instruction to the printer; and means for setting a print format of the information, which is acquired from the information providing server, in the printer, and wherein the information providing server comprises means for calculating a total of the amount of information notified by the printer.

According to a second aspect, in the information providing system, the print means (printer) prints the information when the information is acquired from the information providing server.

According to a third aspect, in the information providing system, the print means (printer) prints the information when the information acquired from the information providing server is updated from the information acquired last.

According to a fourth aspect, when the print means (printer) prints the information received from a user terminal, the printer prints the information, which is acquired from the information providing server, in a margin of the print medium.

According to a 5th aspect, when the print means (printer) prints the information received from a user terminal, the printer prints the information, which is acquired from the information providing server, in a margin of the print medium, the print margin being produced by reducing a predetermined print range of the information.

According to a 6th aspect, when the print means (printer) prints the information received from a user terminal, the printer combines the information acquired from the information providing server and prints the information in a blank portion of a print field (range) of the information.

According to a 7th aspect, the print means (printer) prints the information, which is acquired from the information providing server, on a reverse side of the print medium on which the information from the user terminal is to be printed.

According to an 8th aspect, the communication line is/comprises a line connected to the Internet.

According to a 9th aspect, there is provided an information providing method comprising the steps of storing, by an information provider, information into an information providing server; by print means (printer) of a customer, acquiring the information stored in the information providing server, printing the information on a print medium, and notifying an amount of the printed information to the information providing server; and paying consideration to the customer by the information provider based on the notified amount of information.

According to a 10th aspect, the information providing server and the print means are connected via the Internet.

According to an 11th aspect, there is provided an information providing method comprising the steps of (a) storing, by an information provider, information into an information providing server; (b) lending print means (printer) from the information provider to a customer; (c) by the print means, acquiring the information stored in the information providing server, printing the information on a print medium, and notifying an amount of the printed information to the information providing server; and (d) collecting, by the information provider, an amount of value corresponding to a rental charge of the printer from the customer based on the notified amount of information.

According to a 12th aspect, in the information providing method, the information providing server and the printer are connected via the Internet.

In a further aspect of the present invention, there are provided computer readable program products which perform and operate the information providing method and systems. Further aspects of the present invention will become apparent in the entire disclosure.
FIG. 1 is a block diagram showing the configuration of an information providing system in a first embodiment of the present invention;
FIG. 2 is a sequence diagram showing the processing flow of the information providing system shown in FIG. 1;
FIG. 3 is a sequence diagram showing the processing flow of an information providing system in a second embodiment of the present invention;
FIG. 4 is a diagram showing an example of information on a setting screen of a user terminal 20 that is set in printer 30 shown in FIG. 1;
FIG. 5 is a diagram showing a first print example of the printer 30 shown in FIG. 1;
FIG. 6 is a diagram showing a second print example of the printer 30 shown in FIG. 1;
FIG. 7 is a diagram showing a third print example of the printer 30 shown in FIG. 1;
FIG. 8 is a diagram showing a fourth print example of the printer 30 shown in FIG. 1; and
FIG. 9 is a block diagram showing the configuration of a conventional information providing system.

Some embodiments of the present invention will now be described more in detail with reference to the drawings.

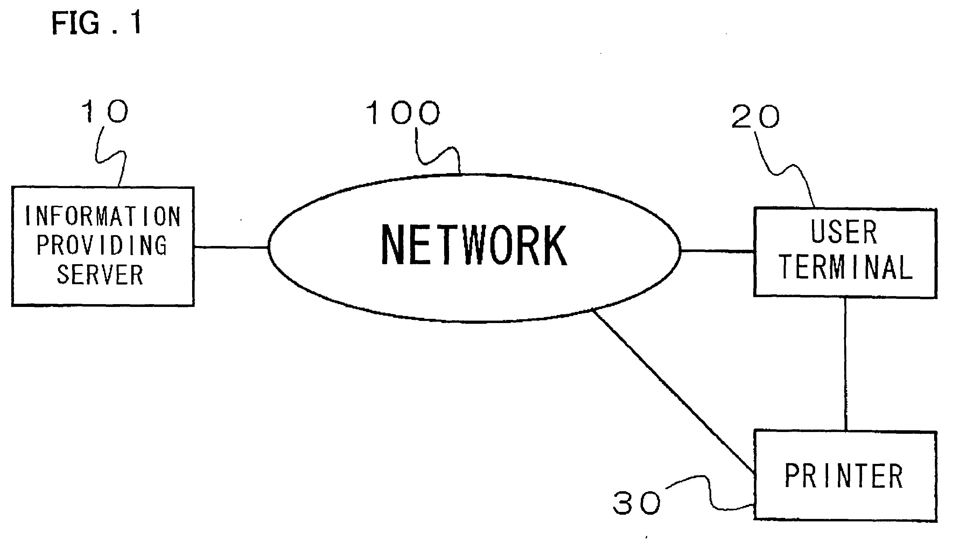

FIG. 1 is a block diagram showing the configuration of an information providing system in a first embodiment of the present invention. Referring to this figure, the information providing system comprises an information providing server 10, a user terminal 20, printer 30 connected to the user terminal 20, and a network 100 such as the Internet over which the server, terminal, and printer are connected. The information providing server 10, user terminal 20, and printer 30 are each connected to the network 100 via a communication line. In the information providing system in the first embodiment, a customer owns the printer 30.

The information providing server 10 shown in FIG. 1, composed of data processing devices such as a workstation or a server, has a function that delivers information - for example, advertisements stored by the information provider - over the network 100 and a function that collects information via the network 100.

The user terminal 20, composed of data processing devices such as a personal computer, has a function that acquires information delivered by the information providing server 10 and displays the information on a screen and a function that sends print information to the printer 30 and sets the print instruction or the print format.

The printer 30 has the functions described below. The information acquisition function acquires information delivered by the information-providing server 10 over the network 100. The print function prints on print media, such as paper, the information acquired from the information providing server 10 or received from user terminal 20 according to the print instruction or the print format received from the user terminal 20. The print information amount notification function notifies to the information providing server 10 the amount of information acquired from the information providing server 10 and printed on the printer. The combination print function combines information acquired from the information providing server 10 and information received from the user terminal 20 for printing. In addition, the printer 30 can print data on both sides of a print medium.

Note that a plurality of user terminals 20 and printers 30 may be connected to the network 100. The amount of information notified by the printers 30 is registered and added up for each customer in the information-providing server 10.

The printer in the information providing system in the first embodiment described above is the printer 30. However, the printer may be any device with the print function such as a copier or a facsimile.

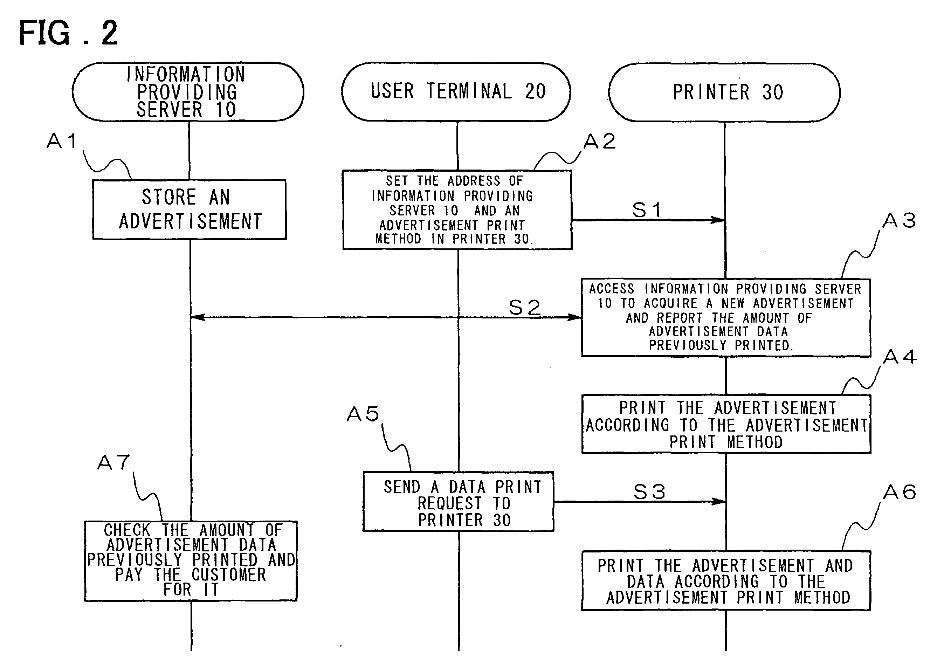

Referring to FIG. 2 and FIGS. 4-8, the operation of the information providing system in the first embodiment described above will be described. In the description below, it is assumed that the information provided by the information providing server 10 is an advertisement and that the network 100 is the Internet.

FIG. 2 is a sequence diagram showing the flow of processing of the information providing system shown in FIG. 1.

First, the information provider stores an advertisement in the information-providing server 10 (step A1). The customer connects (or put the connection on) the user terminal 20 to the printer 30. Data S1 is set in the printer 30. The data S1 includes an address required for Internet connection to the information providing server 10 and a print method such as an advertisement print format (step A2).

Next, the printer 30 accesses (directly or indirectly via the user terminal) the information-providing server 10 (S2) to acquire the advertisement from the information-providing server 10. At this time, the printer 30 reports to the information providing server 10 the amount of advertisement (commercial) information that was previously acquired and printed (step A3).

Next, the printer 30 prints the acquired advertisement according to the print method that was set in step A2 (step A4).

In response a print instruction S3, as well as data such as a manuscript to be printed, from the user terminal 20, the printer 30 prints the advertisement and data received from the user terminal 20 according to the print method that was set in step A2 (steps A5 and A6).

The information provider pays an amount of value (consideration) to the customer according to the amount of information reported to the information-providing server 10 in step A3 (step A7).

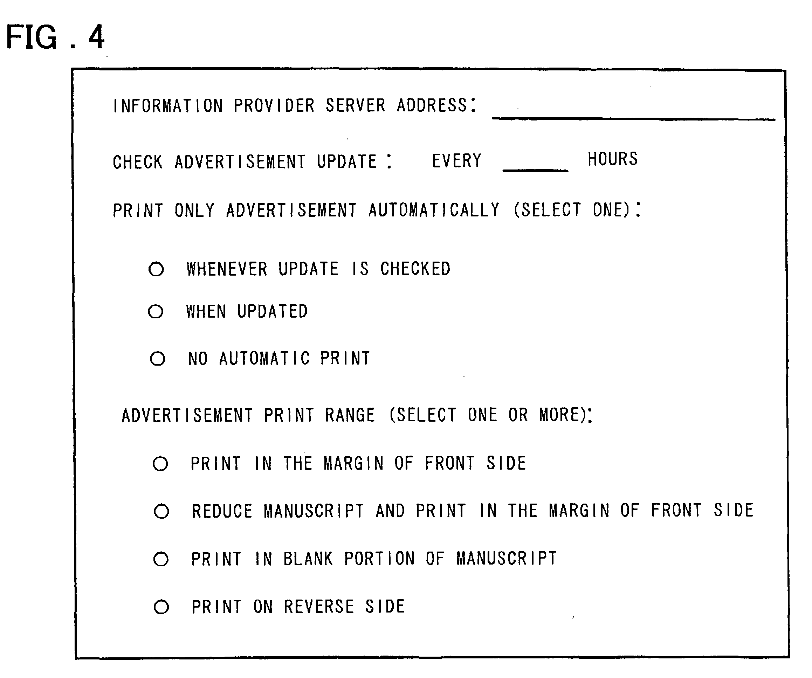

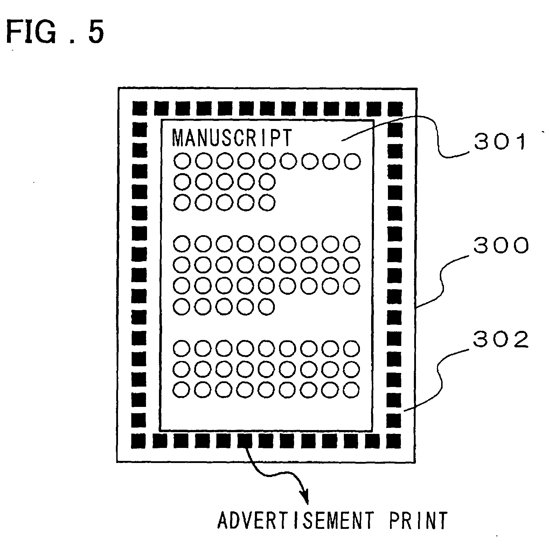

FIG. 4 shows an example of the setting screen displayed on the user terminal 20. This screen indicates data S1 that is set in the printer 30 in step A2. FIGS. 5-8 are examples of information printed on a print medium by the printer 30 in step A6. These examples show the differences among advertisement print ranges determined by an advertisement print format that is specified on the setting screen shown in FIG. 4.

FIG. 5 shows an example of print when "Print in the margin of front side" is selected on the screen shown in FIG. 4. In this case, the advertisement is printed in a margin 302 of a print area 300 of a print medium. The margin 302 is outside a print range 301 of manuscript data received from the user terminal 20.

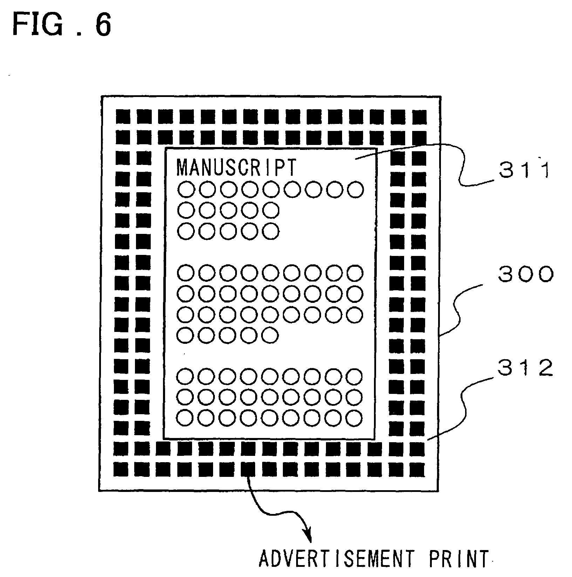

FIG. 6 shows an example of print when "Reduce manuscript and print in the margin of front side" is selected on the screen in FIG. 4. In this case, a print field (range) 311 in the print area 300 on the print medium is a field reduced (contracted or compressed) from the predetermined print field 301 shown in FIG. 5, and the advertisement is printed in a margin 312 of this reduced print field.

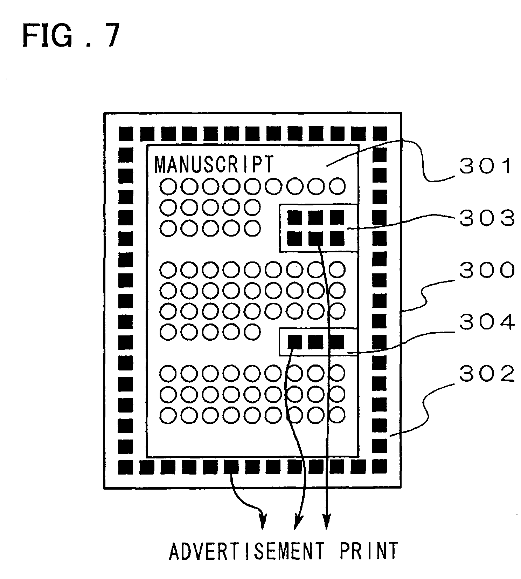

FIG. 7 shows an example of print when "Print in blank portion of manuscript" is selected on the screen shown in FIG. 4. In this case, the advertisement is printed in blank portions 303 and 304 in the print field 301 of the manuscript data received from the user terminal 20. In this case, the advertisement is printed also in the margin 302.

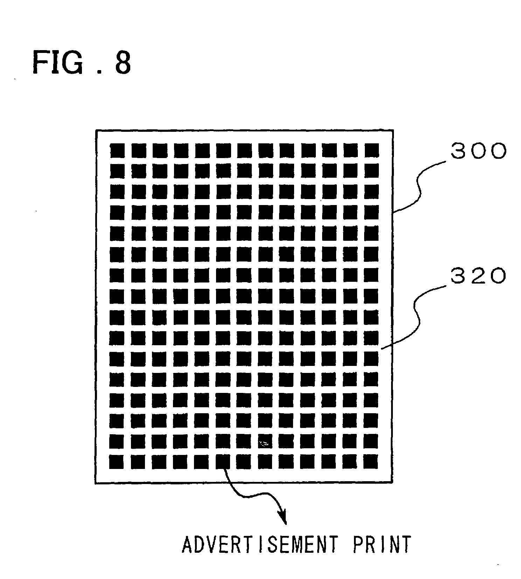

FIG. 8 shows an example of print when "Print on reverse side" is selected on the screen shown in FIG. 4. In this case, the advertisement is printed on a reverse side 320 of the print side where manuscript data received from user terminal 20 is printed.

If "Whenever update is checked" is selected under "Print only advertisement:" in step A4 described above, the acquired advertisement is always printed. If "When updated" is selected, the advertisement is printed only when it was updated since last acquisition. An example of print in step A4 is shown in FIG. 8. Only the advertisement is printed.

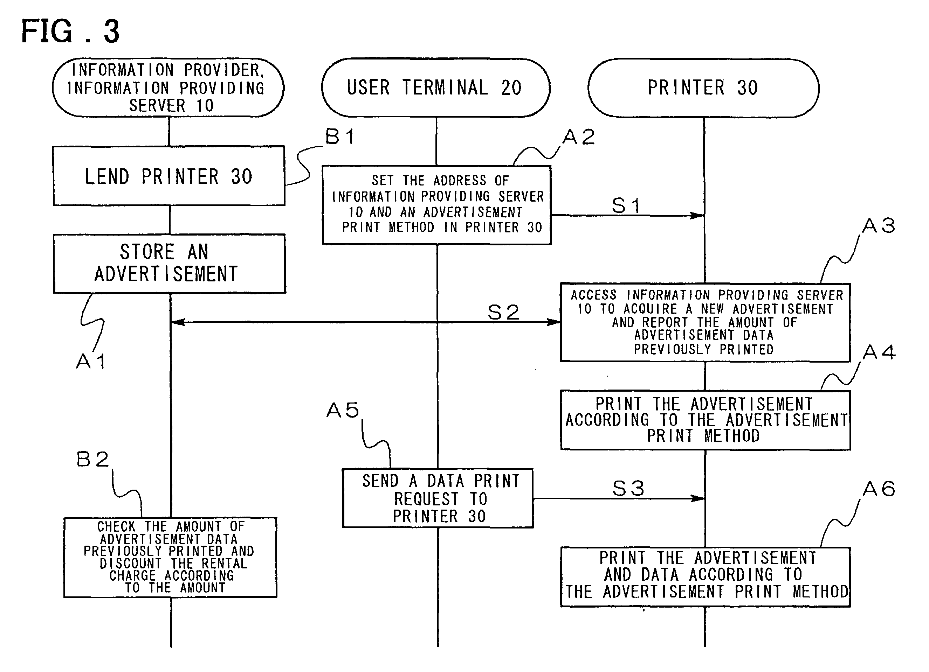

FIG. 3 is a sequence diagram of the processing flow of an information providing system in a second embodiment of the present invention. The configuration of the information providing system in the second embodiment differs from that of the first embodiment in FIG. 1 described above only in that the printer 30 is lent from the information provider to the customer. The rest of the configuration is similar to that of the first embodiment shown in FIG. 1 described above.

Referring to FIG. 3, the operation of the information providing system in the second embodiment will be described. First, the information provider lends a printer 30 to a customer (step B1). After that, steps A1-A6 in the first embodiment shown in FIG. 2 are executed.

Then, the customer is charged an amount of value (consideration) corresponding to the lent printer 30 according to the reported amount of printed information by the information-providing server 10. That is, the rental charge of the printer 30 is discounted according to the amount of information printed on the printer 30 that is lent (step B2).

In the above embodiment, the customer can get information such as advertisements and, at the same time, save the running cost of the printer by the refund from the information provider.

The information provider may get a direct advertisement effect from the customer and, at the same time, an indirect advertisement effect when the customer distributes copies of printed matter that includes the advertisement.

The methods and systems are operated by a computer readableprogram which performs the necessary steps for carrying out the embodiments. Particularly, the program performs setting of the printer so as to permit the execution of the steps.

While the preferred embodiments of the present invention have been described with reference to the drawings, it is to be understood that the specific configuration is not limited to those shown in the embodiments but changes and variations in the design may be made without departing from the spirit of the present invention.

The meritorious effects of the present invention are summarized as follows.

Particularly, there is provided a computer readable program product for performing an information providing service, the program product comprising the steps of; (a) storing information to be provided to customers in an information providing server; (b) setting a printer at a customer so as to acquire the information stored in said information providing server, to print the information, and to notify an amount of the printed information to said information providing server; (c) paying the customer based on the notified amount of the printed information Also there is provided a program product comprising the steps of;
(a) storing information to be provided to customers in an information providing server;
(b) registering a printer lent from an information provider to a customer;
(c) setting said printer so as to acquire the information stored in said information providing server, to print the acquired information, and to notify an amount of the printed information to said information providing server; and
(d) collecting an amount of value corresponding to a rental charge of said printer from the customer based on the notified amount of the printed information.

Other features or aspects are also disclosed in the claims, the entire disclosure thereof being incorporated herein by reference thereto.

As described above, information provided by an information provider is printed on a print medium by printer. Therefore, the customer views the provided information many times.

In addition, the customer is paid for the amount of information printed by the customer. Therefore, the customer may view the information with no additional charge.

It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items might fall under the modifications aforementioned.

## Claims

1. An information providing system comprising:
a printer;
a user terminal connected to said printer and sending print information to said printer; and
an information providing server delivering information via a communication line,
wherein said printer comprises :
means for acquiring the information delivered from said information providing server, said means for acquiring the information being connected to said information providing server via the communication line;
means for printing the acquired information according to a print instruction received from said user terminal; and
means for notifying an amount of information acquired from said information providing server and printed,
wherein said user terminal comprises:
means for sending a print instruction to said printer; and
means for setting a print format of the information, which is acquired from said information providing server, in said printer, and
wherein said information providing server comprises :
means for calculating a total of the amount of information notified by said printer.

2. The information providing system as defined by claim 1 wherein said printer prints the information when the information is acquired from said information providing server.

3. The information providing system as defined by claim 1 wherein said printer prints the information when the information acquired from said information providing server is updated from the information acquired last.

4. The information providing system as defined by claim 1 wherein, when said printer prints the information received from said user terminal, said printer prints the information, which is acquired from said information providing server, in a margin of the print medium.

5. The information providing system as defined by claim 1 wherein, when said printer prints the information received from said user terminal, said printer prints the information, which is acquired from said information providing server, in a margin of the print medium, said print margin being produced by reducing a predetermined print field of the information.

6. The information providing system as defined by claim 1 wherein, when said printer prints the information received from said user terminal, said printer combines the information acquired from said information providing server and prints the information in a blank portion of a print field of the information.

7. The information providing system as defined by claim 1 wherein said printer prints the information, which is acquired from said information providing server, on a reverse side of the print medium on which the information from said user terminal is to be printed.

8. The system as defined in any one of claims 1 to 7
wherein the communication line is a line connected to the Internet.

9. An information providing method comprising the steps of :
(a) storing, by an information provider, information into an information providing server;
(b) by a printer of a customer, acquiring the information stored in said information providing server, printing the information on a print medium, and notifying an amount of the printed information to said information providing server; and
(c) paying consideration to the customer by the information provider based on the notified amount of information.

10. An information providing method comprising the steps of :
(a) storing, by an information provider, information into an information providing server;
(b) lending printer from the information provider to a customer;
(c) by said printer, acquiring the information stored in said information providing server, printing the information on a print medium, and notifying an amount of the printed information to said information providing server; and
(d) collecting, by the information provider, an amount of value corresponding to a rental charge of said printer from the customer based on the notified amount of information.

11. The information providing method as defined by claim 9 or 10 wherein said information providing server and said printer are connected via the Internet.

12. An information providing system comprising :
an information providing server having means for storing information to be provided to customers;
means for setting a printer at a customer so as to acquire the information stored in said information providing server, to print the information, and to notify an amount of the printed information to said information providing server;
wherein said information providing server comprising means for paying the customer by an information provider based on the notified amount of the printed information.

13. An information providing system comprising :
an information providing server having means for storing, by an information provider, information to be provided to customers;
means for registering a printer lent from the information provider to a customer;
means for setting said Printer so as to acquire the information stored in said information providing server, to print the acquired information, and to notify an amount of the printed information to said information providing server; and
means for collecting a rental charge of said printer from the customer based on the notified amount of information.

14. The system as defined in claim 12 or 13
wherein said information providing server and said printer are connected via an Internet.

15. The system as defined in claim 12, 13 or 14
wherein said means for setting the printer includes a program which performs said setting through being accessed by said printer.

16. A computer readable program product for performing an information providing service, the program product comprising the steps of;
(a) storing information to be provided to customers in an information providing server;
(b) setting a printer at a customer so as to acquire the information stored in said information providing server, to print the information, and to notify an amount of the printed information to said information providing server;
(c) paying the customer based on the notified amount of the printed information.

17. A computer readable program product for performing an information providing service, the program product comprising the steps of;
(a) storing information to be provided to customers in an information providing server;
(b) registering a printer lent from an information provider to a customer;
(c) setting said printer so as to acquire the information stored in said information providing server, to print the acquired information, and to notify an amount of the printed information to said information providing server; and
(d) collecting an amount of value corresponding to a rental charge of said printer from the customer based on the notified amount of the printed information.

18. The program product as defined by claim 17, wherein said amount of value corresponds to a rental charge less an amount associated with the notified amount of the printer information.
